# FASCICULE DE BREVET EUROPEEN

(11) **EP 0 464 116 B1**
(45) Date de publication et mention de la délivrance du brevet: **28.07.1993**
(21) Numéro de dépôt: 90905552.7
(22) Date de dépôt: 19.03.1990
(51) Int. Cl.: B29C 33/02, B29C 33/04, B30B 15/06

(54) **EQUIPEMENT CHAUFFANT ELECTRIQUEMENT A HAUTE TEMPERATURE PAR ZONE REGULEE POUR LA MISE EN OEUVRE DE PRODUITS EN MATERIAUX COMPOSITES**
ELEKTRISCHE HOCHTEMPERATURHEIZEINRICHTUNG MIT GEREGELTEN ABSCHNITTEN FÜR DIE HERSTELLUNG VON GEGENSTÄNDEN AUS VERBUNDWERKSTOFF
ZONE-REGULATED HIGH-TEMPERATURE ELECTRIC-HEATING SYSTEM FOR THE MANUFACTURE OF PRODUCTS MADE FROM COMPOSITE MATERIALS

(30) Priorité: 20.03.1989 FR 8903562
(43) Date de publication de la demande: 08.01.1992
(73) Titulaire: GUILLEMOT, Gérard, F-40150 Hossegor (FR)
(72) Inventeur: GUILLEMOT, Gérard, F-40150 Hossegor (FR)
(74) Mandataire: Hasenrader, Hubert
(86) Numéro de dépôt international: FR9000184
(87) Numéro de publication internationale: WO9011173

(56) Documents cités:
- EP-A- 0 282 805
- WO-A-87/06876
- DE-A- 3 032 422
- FR-A- 894 040
- FR-A- 2 383 773
- US-A- 1 357 343
- US-A- 4 659 304
- Patent Abstracts of Japan, vol. 8, no 270 (M-344) (1707), 11 Dec 1984; & JP-A-59142108 (MATSUSHITA DENKI) 15 Août 1984
- Patent Abstracts of Japan vol.7, no 116 (M-216) (1261), 20 Mai 1983;& JP-A-5836408 (DENKA POLYMER) 3 Mars 1983

## Description

L'invention concerne un équipement chauffant électriquement à haute température destiné à être monté sur un support mécanique rigide, notamment un bâti ou une table de presse, pour la fabrication de produits en matière plastique et matériaux composites, et du type comportant :
une plaque de répartition calorifique éloignée dudit support mécanique,
des moyens d'isolation thermique prévus contre ledit support mécanique et sur les bords latéraux dudit équipement,
des moyens de chauffage électriques et des moyens de refroidissement disposés entre ladite plaque de répartition calorifique et lesdits moyens d'isolation thermique, et
des moyens de régulation thermique pour maintenir une température homogène sur toute la surface de ladite plaque de répartition calorifique en fonction du programme de fabrication.

On connaît déjà des plateaux chauffants utilisant différents principes de chauffage tels que : vapeur, fluides caloporteurs et résistances électriques chauffantes.

Ces plateaux chauffants ne permettent pas de respecter convenablement les conditions spécifiques de fabrication de produits en matériaux composites, notamment les précisions et régulations de températures locales au niveau des moules et outillages de production.

Ces plateaux chauffants sont généralement en acier monobloc perforés dans la masse par des moyens divers assurant la circulation des fluides caloporteurs (huile et eau en serpentin ou vapeur circulant en peigne). Ces dispositions limitent les dimensions de ces plateaux aux capacités des machines à percer. Ces plateaux chauffants peuvent être équipés de résistances cylindriques chauffantes de type cartouche ayant une longueur maximum de un mètre ou mises bout à bout en opposition pour une largeur maximum de plateau de deux mètres. On utilise également des résistances électriques blindées droites ou en boucle. Elles sont difficiles à extraire. Elles ne permettent pas, dans ce cas, une intervention rapide et engendrent des zones froides de 50 à 60 mm de bordure du plateau dont la longueur utile se trouve réduite. Du fait que ces résistances sont de forme cylindrique et qu'elles sont introduites dans des trous de section carrée, la conduction est mauvaise à cause de la présence d'air et de la faible surface de contact.

On utilise également des résistances plates blindées de fabrication traditionnelle réalisées en un seul élément de chauffe à charge constante ayant une longueur maximum de 1,5m, qui ont également l'inconvénient de présenter une zone froide à l'extrémité. Pour compenser en partie les pertes calorifiques en bordure de plateau on réalise une charge concentrée aux extrémités. Ces résistances sont définies et alimentées à partir d'un calcul théorique. Ces plateaux ne permettent pas d'obtenir une précision suffisante de chauffe là où elle est nécessaire, il s'ensuit des anomalies locales dans la mise en oeuvre des produits en matériaux composites, préjudiciables à leur résistance mécanique. De plus les temps de fabrication de ces plateaux, ceux de mise en oeuvre des produits sont longs. Ils ne permettent d'obtenir ni la souplesse mécanique et thermique requise notamment sur le plan dimensionnel, ni le rendement énergétique souhaitable, ni la rapidité de mise en oeuvre ni les précisions de températures pour une polymérisation régulière des structures composites dont le taux de rebut est important. De plus les investissements engendrés sont élevés en regard des résultats insatisfaisants qu'ils apportent.

Le brevet US-A-4 659 304 décrit un équipement chauffant du type mentionné ci-dessus dans lequel les moyens de chauffage sont formés par des résistances qui logent dans des rainures ouvertes sur une face de la plaque métallique de chauffage. On connaît également par WO-A-8 706 876 un équipement chauffant dont la plaque métallique de chauffage comporte des rainures pour loger les résistances électriques qui alternent avec des rainures prévues pour le passage du fluide de refroidissement. Ces équipements chauffants nécessitent un usinage spécial de la plaque de chauffe qui augmente les prix de revient de l'équipement et empêchent une modification ultérieure de la structure de l'équipement.

Il a également été proposé de découper virtuellement la plaque de répartition calorifique en plusieurs zones de chauffage et de réguler la température sur chaque zone de chauffage en fonction de la température d'une zone privilégiée. DE-A-3 032 422 en particulier dévoile une telle disposition. Toutefois ces dispositions sont insuffisantes dans les équipements chauffants pour la fabrication de produits notamment en matériaux composites qui nécessitent des variations précises de la température dans le temps en fonction d'un cahier des charges rigoureux sous peine d'entraîner des rebuts de fabrication importants.

Le but de la présente invention est de proposer un équipement chauffant du type mentionné qui pallie ces inconvénients, qui soit d'un prix de revient faible et facilement modifiable et qui permette d'obtenir une homogénéité parfaite de la température sur toute la surface de la plaque de répartition calorifique, pendant tout le cycle de fabrication. Cette 'homogénéité doit être obtenue pendant les paliers de température et pendant les montées en température.

Le but est atteint selon l'invention par le fait que
a) lesdits moyens de chauffage électriques et lesdits moyens de refroidissement sont disposés en couches indépendantes entre lesdits moyens d'isolation thermique et ladite plaque de répartition calorifique,
b) les moyens de chauffage électriques sont composés d'un sous-module de chauffe situé du côté de ladite plaque de répartition calorifique et d'une plaque de retour calorifique accolée audit sous-module de chauffe du côté opposé à ladite plaque de répartition calorifique,
c) le sous-module de chauffe comporte une pluralité d'éléments de chauffe blindés, plats et monobloc, disposés dans le sens de la largeur de ladite plaque de répartition calorifique et entretoisés par des cales,
d) chaque élément de chauffe comporte au moins trois résistances électriques séparées et réparties dans le sens de sa longueur,
e) les éléments de chauffe sont répartis dans le sens de la longueur de ladite plaque de répartition calorifique en au moins trois zones définissant grâce à la répartition des résistances électriques dans le sens de la largeur de ladite plaque, au moins neuf zones de chauffe juxtaposées et jointives,
f) la plaque de répartition calorifique comporte au niveau de chaque zone de chauffe un capteur de température,
g) les résistances électriques de chaque zone de chauffe sont alimentées électriquement de façon indépendante des résistances électriques des autres zones de chauffe par l'intermédiaire de moyens électroniques d'alimentation en puissance par zone en fonction de consignes prédéterminées par zone de chauffe coopérant avec lesdits capteurs de température, lesdits moyens d'alimentation en puissance par zone étant régulés par un boîtier de régulation PID.

Avantageusement, les moyens de refroidissement comportent :
un module de refroidissement présentant plusieurs circuits de refroidissement indépendants montés en parallèle et entretoisés par des cales, lesdits circuits de refroidissement étant asservis par des électrovannes à partir d'un boîtier électronique de commande, et
une deuxième plaque de retour calorifique accolée au module de refroidissement du côté opposé à ladite plaque de répartition calorifique.

Si on donne la priorité au refroidissement, les moyens de refroidissement sont interposés entre la plaque de répartition calorifique et les moyens de chauffage électriques.

Si au contraire, on accorde la priorité au chauffage, les moyens de chauffage électriques sont interposés entre la plaque de répartition calorifique et les moyens de refroidissement.

Grâce à cette disposition, les éléments de chauffe sont simplement entretoisés par des cales. Il n'est plus nécessaire d'usiner des rainures dans les plaques de chauffe. Suivant l'utilisation de l'équipement chauffant, on peut inverser la position du module de chauffe et des moyens de refroidissement. Les éléments de chauffe étant plats et blindés permettent une grande surface d'échange avec la plaque de répartition calorifique. Pour modifier la surface des zones de chauffe, il suffit uniquement de remplacer les éléments de chauffe anciens par de nouveaux éléments de chauffe ayant un autre dimensionnement en largeur ou une répartition différente des résistances, ou de modifier dans le sens de la longueur de la plaque de répartition calorifique la répartition des éléments en zones.

Les zones de chauffe de la périphérie ont, de préférence, des surfaces différentes de celles du centre.

Avantageusement, certaines zones, coins et bords de l'équipement, sont associées à des résistances électriques de puissances différentes.

Avantageusement les moyens électroniques d'alimentation en puissance par zone comportent pour chaque zone de chauffe une carte électronique de modulation de puissance équipée d'un potentiomètre de réglage manuel de la puissance électrique.

Avantageusement, il comporte de plus un calculateur informatique muni d'un logiciel adapté et destiné à réguler les moyens électroniques d'alimentation en puissance par zone, en fonction de consignes prédéterminées par zone de chauffe.

De manière à mieux réguler les températures, chaque résistance électrique est équipée d'un capteur de mesure de température relié au calculateur.

En plus des avantages de construction mentionnés ci-dessus, il est à noter que le réglage de la puissance par zone de chauffe permet de garantir l'homogénéité de la température sur toute la surface de la plaque de répartition calorifique ou en fonction des déperditions thermiques. Il permet également d'ajuster cette homogénéité en fonction de l'utilisation de la machine soit pour un travail à vide, sans outillage dans la fabrication de plaques par exemple, soit pour un travail en charge, avec des outillages de différentes conceptions. Le réglage de la puissance électrique effectué par les cartes électroniques ou par le logiciel permettra d'obtenir une homogénéité de température dans le moule selon le rayonnement extérieur engendré par la hauteur et la forme de la pièce à obtenir. Ces réglages de température sont variables en fonction des points de consigne de température, demandés par la transformation des matériaux.

Les autres avantages apportés par l'équipement selon l'invention sont les suivants :
- surface modulable à toutes les utilisations sans limitation de dimensions ;
- rendement de production de pièces très nettement amélioré ;
- taux de rebut des pièces en matériaux composites devenu nul, leur cuisson homogène permet de produire ces pièces à un très haut niveau de qualité ;
- rapport important surface totale du plateau/surface de chauffe ;
- très bon échange thermique par un maximum de surface en contact franc ;
- interchangeabilité rapide de chaque constituant technique, éléments chauffants blindés ou circuits de refroidissement ;
- possibilité de construction de grandes surfaces de travail et de très grandes surfaces par assemblage en surface de modules de chauffe standardisés ;
- facilité de montage et d'intervention de service après-vente en maintenance ;
- réglage de la planéité de la surface chauffante à chaud ou à froid grâce à leur fixation rapide sur des bâtis ou plateaux de machines ou sur des caissons intermédiaires ;
- résistance aux dilatations mécaniques et aux chocs thermiques engendrés au début de la phase de refroidissement par l'admission d'eau dans les circuits de refroidissement, grâce à un montage par empilement qui permet les dilatations latérales et évite les tensions internes dans le module ;
- souplesse d'adaptation aux processus de fabrication, chaud, froid, ou les deux, avec priorité de chauffage ou de refroidissement ;
- adaptation d'une régulation électronique PID de températures multi-zones selon les impératifs techniques de montage ;
- possibilité d'élévation rapide en température avec des valeurs de pointe à 500° et compensation des pertes calorifiques naturelles et exceptionnelles en cours de travail ;
- possibilité d'utiliser des éléments de chauffe montés sur support céramique pour atteindre des températures régulées de surface de l'ordre de 800 à 900° au lieu de 500° maximum avec des éléments de chauffe sur support mica ;
- possibilité de réaliser des outillages incluant des éléments de l'équipement pour chauffer au plus près des pièces à mettre en oeuvre, notamment lorsque la hauteur des outillages est importante au-dessus de la plaque de répartition calorifique ;
- possibilité d'adapter les modules de chauffe sur des presses à multi-étages à plateaux intermédiaires ;
- possibilité d'adapter l'équipement pour toutes applications de mise en oeuvre de produits techniques plastiques, composites en général et divers, c'est-à-dire tous matériaux nécessitant une grande fiabilité dans les courbes de température pour obtenir un assemblage mécanique correspondant à un cahier des charges précis pour la réalisation de pièces spécifiques ;
- adaptation de l'équipement sur tous types de machines :
   a) par compression sur presses pneumatiques, presses hydrauliques, nécessitant le montage d'un ou de plusieurs modules superposés,
   b) par contact sur four et tunnel en continu ou au défilé,
   c) sur tables chauffantes de toutes dimensions, avec connexions spéciales au centre,
   d) sur toutes machines spéciales.

L'invention est décrite en détail dans le texte qui suit en référence aux dessins annexés donnés à titre d'exemples non limitatifs, dans lesquels :
- les figures 1 à 9 montrent des exemples de moyens de chauffage de plateaux de presses de types connus ;
- la figure 10 montre un exemple d'élément blindé de chauffe selon l'invention, comportant trois charges séparées ;
- la figure 11 montre un exemple d'élément blindé de chauffe identique à celui de la figure 10, muni de capteurs de température intégrés ;
- la figure 12 montre, en section transversale, un exemple d'élément de chauffe selon l'invention,
- la figure 13 montre un exemple d'élément blindé selon l'invention en vue de dessus ;
- les figures 14A, 14B, montrent un exemple de répartition d'éléments de chauffe dans une même zone d'un module ;
- les figures 15 à 18 montrent des exemples de division de modules en zones suivant leurs dimensions et des exemples du nombre d'éléments de chauffe par zone ;
- la figure 19 montre un exemple de module de chauffage selon l'invention ;
- la figure 20 montre un exemple de module de refroidissement selon l'invention ;
- la figure 21 montre un exemple de module mixte de chauffage et refroidissement avec chauffage prioritaire ;
- la figure 22 montre un exemple de module mixte de chauffage et refroidissement avec priorité au refroidissement ;
- la figure 23 montre un exemple de plateau inférieur de presse ou similaire comportant un équipement du type module mixte à priorité au chauffage selon l'invention ;
- la figure 24 montre un exemple de montage de module mixte selon l'invention sur les plateaux en regard d'une presse hydraulique ;
- la figure 25 montre un exemple de montage d'un module sur un bâti de presse hydraulique ;
- la figure 26 montre un exemple de montage d'un module selon l'invention sur une presse pneumatique,
- la figure 27 montre un exemple de prolongation de plaque de répartition calorifique pour de grandes surfaces de chauffe ;
- la figure 28 montre un exemple, en vue de dessus, de fixation d'un module de chauffe selon l'invention sur un plateau de presse ;
- la figure 29 montre un exemple de réalisation d'une surface de chauffe de très grandes dimensions selon l'invention ;
- les figures 30 et 31 montrent un exemple de contrôle et de réglage d'homogénéité de température de surface entre deux modules selon l'invention disposés en regard, au moyen de cales réparties par zone ;
- la figure 32 montre un exemple de contrôle et de réglage d'homogénéité sur chaque partie d'outillage monté sur des modules selon l'invention ;
- la figure 33 montre un exemple de module spécial comportant des éléments de chauffe et de refroidissement inclus dans un outillage monté sur un module selon l'invention ;
- la figure 34 montre un exemple de boîtier électronique de commande et de régulation de puissance par zone ;
- les figures 35 et 36 montrent des exemples de courbes comparatives entre la montée en température d'un plateau chauffant de type connu et un plateau chauffant selon l'invention.

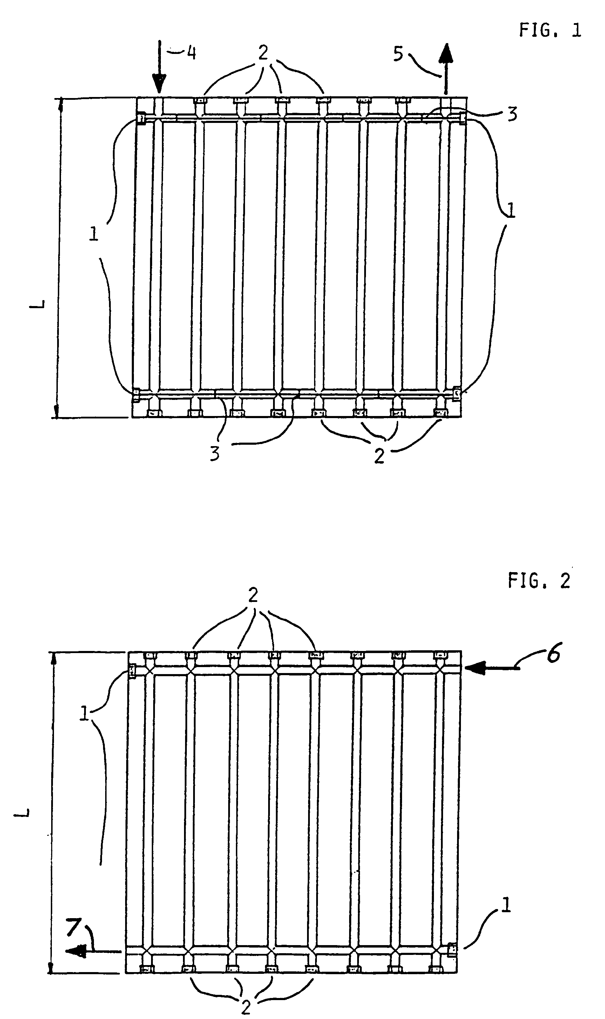

La figure 1 montre un exemple de plateau chauffant connu perforé dans la masse pour réaliser une circulation de fluide caloporteur en serpentin en mettant des bouchons 1, 2 et des pastilles sur tige métallique dans les forages pour former le serpentin, avec une arrivée 4 et un retour 5.

La figure 2 montre un exemple de plateau chauffant connu à circulation de fluide caloporteur de type vapeur à distribution en peigne avec une entrée 6 et un retour 7. Comme pour le plateau précédent le longueur L est limitée aux capacités de la machine à percer.

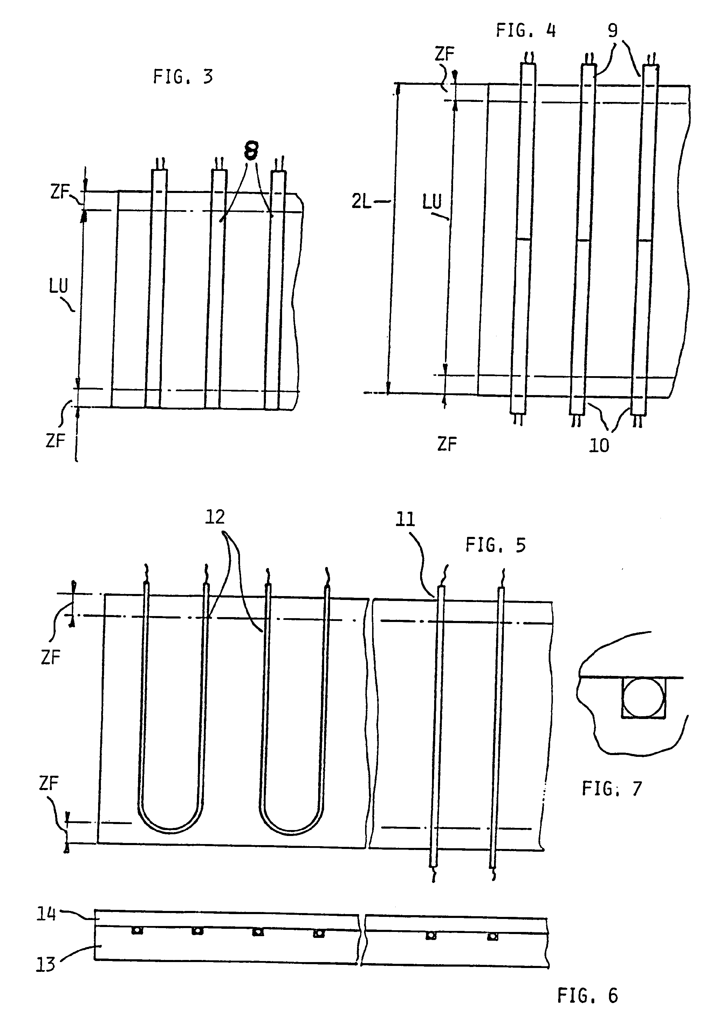

Les figures 3 et 4 montrent un exemple de plateau connu chauffant par résistances électriques du type cartouche cylindrique 8, de toute la largeur du plateau soit un maximum de 1 mètre, ou par deux 9, 10 montées bout à bout en opposition, ce qui permet de passer à 2 mètres de largeur.

Les figures 5 et 6 montrent un autre exemple de plateau connu chauffant par résistances électriques blindées droites 11 ou en épingle 12, mises en place dans un fraisage d'une plaque support 13 recouverte par une plaque 14. La surface d'échange entre le plateau et les résistances est limitée à quatre génératrices (figure 7) et la présence d'air rend la conduction mauvaise. Avec ces résistances on observe des zones froides ZF de 50 à 60 mm en bordure de plateau aux extrémités des résistances.

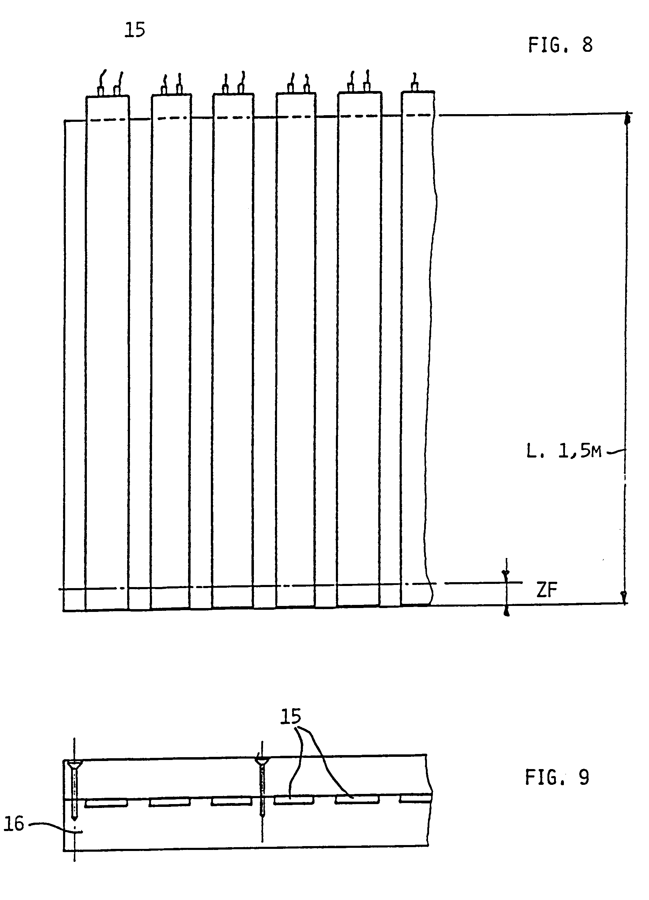

Les figures 8 et 9 montrent un autre exemple de plateau de chauffage connu, utilisant des résistances plates blindées en un seul élément de chauffage sur la largeur du plateau. Elles sont également mises en place chacune dans une rainure fraisée du support mécanique 16. La largeur du plateau peut atteindre 1,5 m. Le rendement est déjà meilleur avec ce type de résistances, la surface d'échange étant très améliorée par rapport aux résistances en cartouche. De plus il existe des éléments chauffants plats à charge concentrée aux extrémités permettant de compenser les déperditions calorifiques de bordure du plateau. Toutes ces résistances sont réalisées à partir d'un calcul théorique et sont alimentées ensemble à puissance constante. En cas d'erreur de calcul, il faut changer les résistances, il n'y a pas de possibilité d'ajustement de température.

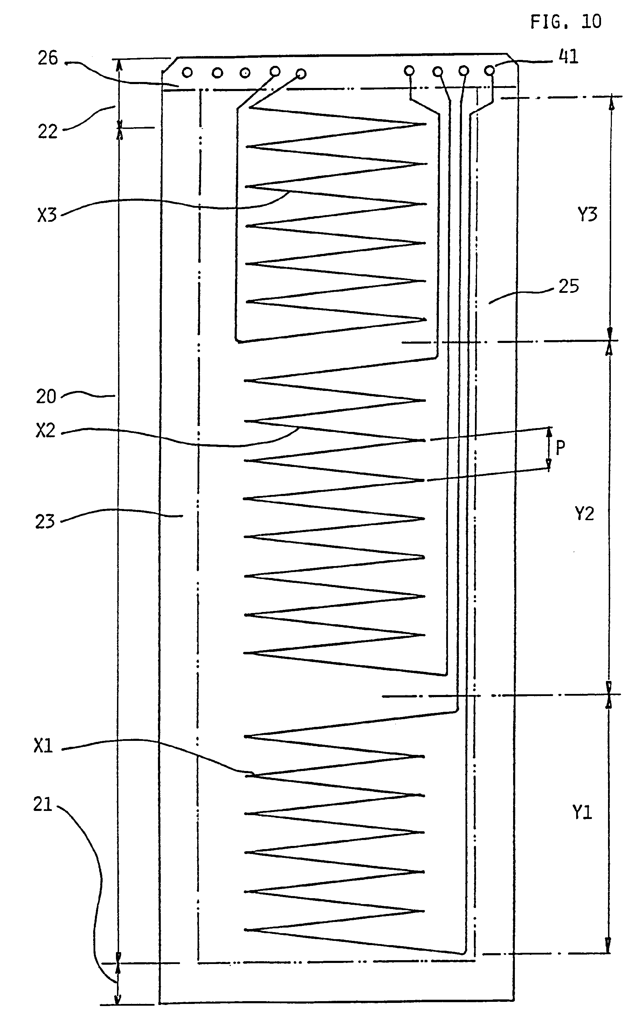

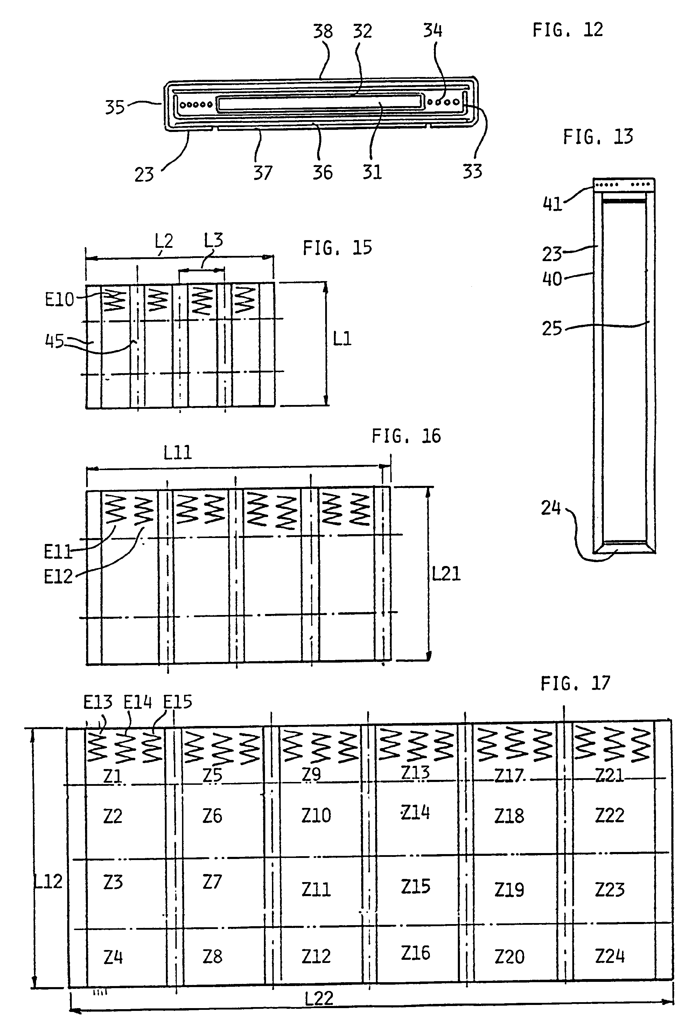

La figure 10 montre schématiquement un exemple d'élément de chauffe blindé plat selon l'invention comportant un minimum de trois résistances électriques X1, X2, X3, de longueur Y1, Y2, Y3 à pas P constant ou variable ajusté selon la puissance nécessaire. Les résistances sont réalisées au moyen par exemple d'un ruban en acier au nickel d'épaisseur E et de largeur l suivant la puissance requise. On a montré la longueur utile 20, une extrémité 21 de longueur 10mm inactive ainsi que l'extrémité 22 côté sortie des conducteurs, de longueur environ 30mm. Les traits mixtes 23, 24, 25, 26 montrent un pliage du blindage extérieur dont la coupe est montrée figure 12. Le ruban constituant les résistances est enroulé sur un support en mica.

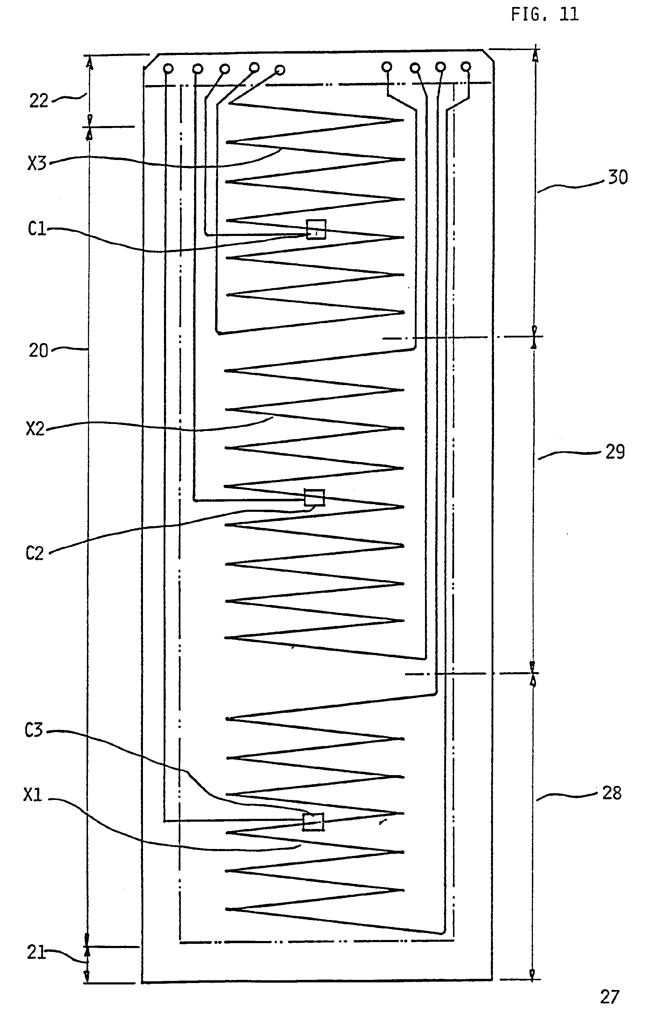

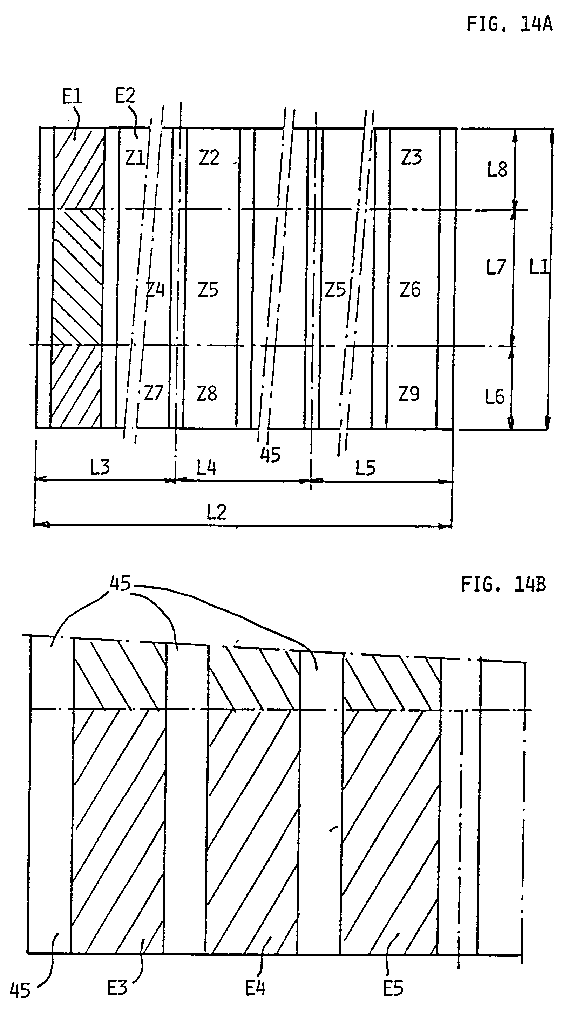

La figure 11 est identique à la figure 10, mais on a ajouté, au milieu de chaque résistance X1, X2, X3, un capteur de mesure de températures intégré C1, C2, C3 du type thermocouple TC par exemple, de façon à rendre insensibles les distorsions de mesures. La largeur 27 des éléments de chauffe peut être de l'ordre de 60mm minimum à 200mm maximum. La longueur de l'élément de chauffe blindé est divisée en au moins trois portions : une portion d'extrémité avant 28, au moins une portion centrale, 29, une portion d'extrémité arrière 30, chaque portion est de longueur et de puissance variables en fonction des besoins.

La figure 12 montre, en section, un exemple d'élément de chauffe plat blindé selon l'invention. Il comporte :
- un support en mica 31 pour les utilisations jusqu'à 500°, ou en céramique au-dessus de 500° et jusqu'à 800 à 900° pour des applications spécifiques à certains matériaux composites,
- la résistance bobinée 32,
- des isolants en mica 33 protégeant les conducteurs 34,
- un blindage en tôle d'acier aluminée 35 replié et serti sur une tôle de fermeture 36 sur laquelle est soudée une tôle 37 de compensation d'épaisseur se trouvant toujours en dessous,'la face active 38 étant toujours du côté de la surface de chauffe du module.

La figure 13 montre, à petite échelle, un élément de chauffe 40 selon l'invention en vue extérieure, les conducteurs d'alimentation et de mesure sont groupés sur des cosses formant un bornier 41 d'extrémité facilitant l'interchangeabilité.

La figure 14A montre un exemple schématique d'un équipement chauffant ou module, de larguer L1 et de longueur L2, dont les éléments de chauffe sont répartis dans le sens de la longueur de l'équipement, en au moins trois zones de largeurs respectives L3, L4 et L5, et qui combinées avec les trois portions de longueurs L6, L7 et L8 des éléments chauffants permettent de découper virtuellement le plateau de chauffage en au moins neuf zones de chauffe juxtaposées et jointives Z1 à Z9.

Les zones peuvent être constituées par un nombre variable d'éléments de chauffe. On peut utiliser pour chaque zone soit deux éléments de chauffe E1 et E2 (figure 14A), soit trois éléments de chauffe E3, E4 et E5. La figure 14B montre une zone comportant trois éléments de chauffe séparés par des cales en acier 45.

Les figures 15 à 17 montrent des exemples de modules de chauffe multi-zones de différentes dimensions comportant soit un élément de chauffe E10 de longueur L1 par zone de larguer L3 (figure 15), soit deux éléments de chauffe E11, E12 par zone sur toute la longueur L11 du module divisé également en douze zones (figure 16), soit trois éléments de chauffe E13, E14, E15 par zone, chaque élément de chauffe ayant une longueur égale à la largeur L12 et ayant son bornier 41 sur l'un des bords du module de longueur L22 divisé en 24 zones Z1 à Z24 (figure 17).

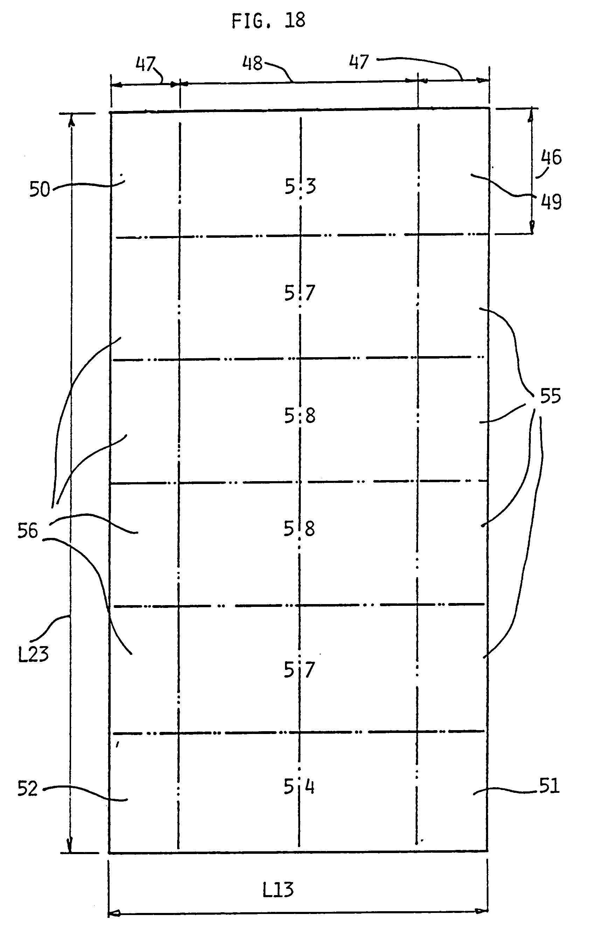

Sur la figure 18 on a montré un module de longueur L23 et de larguer L13 divisé en 24 zones de chauffe indépendantes. Sur les largeurs de zones 46, on peut avoir jusqu'à six éléments de chauffe dont les résistances de chaque zone sont alimentées en série ou en parallèle, on a intérêt à ne pas mettre trop de résistances par zone parce que la régulation devient plus difficile et onéreuse. Les longueurs 47 des résistances par élément de chauffe sont égales aux extrémités et plus longues au centre 48. Pour une même puissance par unité de surface à chauffer les coins perdent environ 30% par fuites thermiques et les bords 53, 54, 55, 56 au moins 10 à 20%, le centre droit et le centre gauche 57 perdent également un peu de température par rapport au centre 58. L'alimentation électrique séparée et régulée en permanence par zone permet de compenser constamment ces fuites thermiques pour assurer une homogénéité de température aux environs du demi-degré sur toute la surface du module.

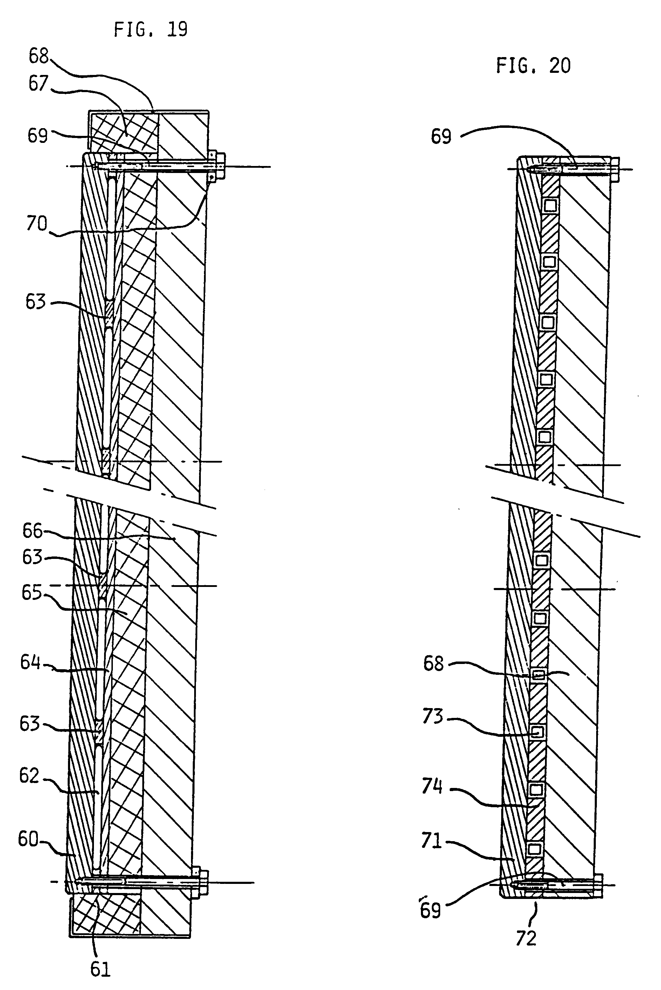

La figure 19 montre un exemple de module de chauffage selon l'invention composé :
- d'une plaque de répartition calorifique 60 de surface égale à celle du module, d'épaisseur variable, réalisée en acier de résistance mécanique et thermique compatible ou tout autre matériau présentant des caractéristiques également compatibles ;
- d'un sous-module de chauffe 61 comportant, par zone, au moins un élément de chauffe blindé 62 d'une longueur égale à celle de la largeur ou de la demi-largeur du module, entretoisé par des cales 63 de largeur fixe, d'une épaisseur précise légèrement inférieure à celle de l'élément chauffant 61 afin de le comprimer au montage pour améliorer le transfert thermique par contact,
- d'une plaque de retour calorifique 64 par les cales 63 faisant fonction de pont thermique, de surface égale à celle du module, dont l'épaisseur est fonction de la puissance à dissiper,
- d'une plaque d'isolation 65 disposée sous la plaque de retour 64, d'épaisseur variable déterminée par les températures de service et de pointe ;
- d'un support mécanique 66 qui peut être chaque plateau de presse, simple ou multiple (presse à plateaux intermédiaires) ;
- d'une isolation latérale 67 autour du module, comportant des fibres en vrac notamment dans le compartiment des connexions électriques et de fluide permettant le bourrage entre tous les raccordements et les tuyauteries, protégées par des carters 68, fixés sur le support mécanique 66, permettant la dilatation totale du plateau à sa température de pointe en évitant les ponts thermiques , ces carters sont conçus de façon à obtenir une température extérieure conforme aux règles de sécurité en vigueur ;
- de vis de fixation 69 en acier à haute résistance, avec des rondelles isolantes thermiquement 70 limitant le pont thermique avec le support mécanique.
   Ces vis permettent de régler la planéité du module à chaud ou à froid selon la nature des plaques de répartition calorifique, aluminium ou acier par exemple, en fonction de la conception de la machine ou de son support et de l'utilisation industrielle de cette machine, dans certains cas les modules chauffants pouvant fonctionner en chauffe permanente. Il suffit de desserrer ces vis 69 pour extraire et changer les éléments chauffants et/ou les circuits de refroidissement comme il sera vu sur la figure 20.

La figure 20 montre un exemple de module de refroidissement selon l'invention constitué :
- d'une plaque de répartition calorifique 71 dont la surface est égale à celle du module,
- d'un sous-module de refroidissement 72 composé de plusieurs circuits de refroidissement indépendants montés en parallèle, réalisés en tube 73 de section carrée de dimensions selon l'application et dont l'épaisseur est déterminée en fonction des forces exercées et des dimensions courantes sur le marché ; ces tubes sont entretoisés par des cales 74 d'épaisseur égale au tube ;
chaque circuit indépendant peut être alimenté :
1 - séparément en ligne directe avec évacuation directe ;
2 - en boucle de un pas, permettant le montage de l'évacuation du même côté que l'alimentation afin de regrouper les collecteurs,
3 - en boucle de deux à n pas formant ainsi un serpentin dont la largeur sera adaptée suivant le nombre d'éléments à la dimension du module, selon les répartitions de température désirées entre la température d'entrée et de sortie de l'eau et la durée de refroidissement que l'on souhaite obtenir qui détermineront le nombre de pas ;

- un support mécanique 68 qui peut être le plateau correspondant de la presse.

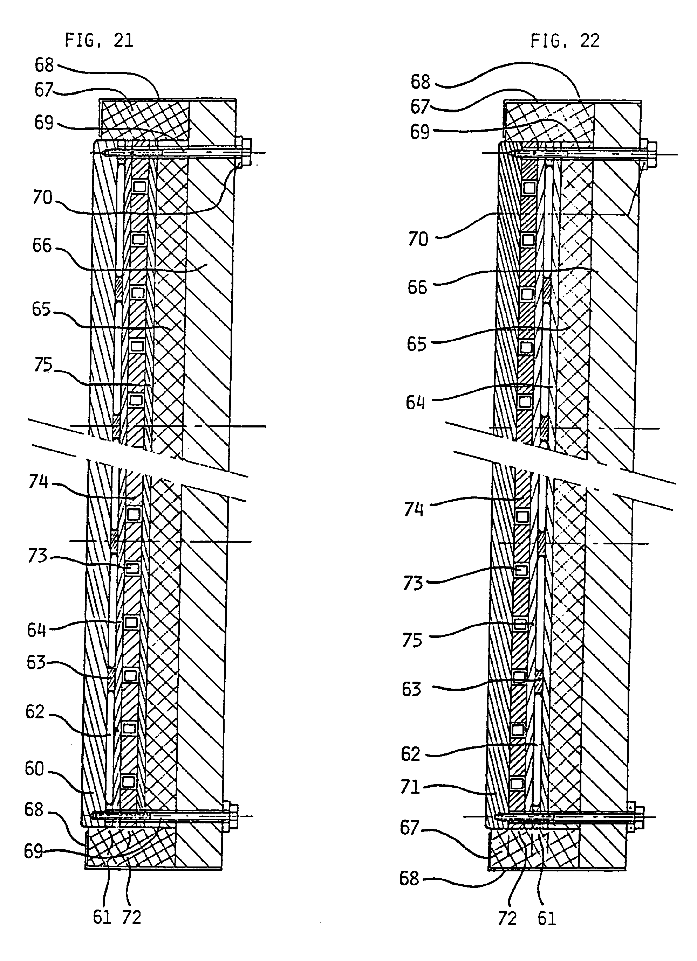

La figure 21 montre un exemple de module mixte de chauffage intégrant des circuits de refroidissement avec priorité au chauffage selon l'invention dans lequel le sous-module de refroidissement 72 est disposé sous la plaque 64 de retour calorifique du sous-module de chauffage 61 ; les numéros de repère pour les pièces identiques ont été réutilisés ; on a disposé une plaque 75 de retour calorifique sous le sous-module de refroidissement ainsi qu'une plaque 65 d'isolation thermique, le module mixte ainsi constitué est fixé par des vis 69 sur un support mécanique 66 qui peut être un plateau de presse. Les mêmes numéros de repère que ceux des figures 19 et 20 ont été utilisés.

La figure 22 montre un module mixte de chauffage suivant l'invention intégrant un sous-module de chauffage 61 et un sous-module de refroidissement intégré 72 avec priorité au refroidissement. Dans ce module mixte, la position du sous-module de refroidissement est inversée par rapport à la figure 21, le sous-module de refroidissement 72 se trouvant au-dessus du sous-module de chauffe 61.

On constate que sur les figures 19 à 22 la réalisation des modules selon l'invention demande une mise en oeuvre réduite puisque tous les éléments sont simplement posés et empilés par couches successives et assemblés par vis sur des plaques simplement percées de trous de fixation, ce qui laisse toutes possibilités de dilatation des différentes pièces constitutives. Les cales entretoises 63 et 74 sont coupées à longueur dans des profilés méplats standard du commerce.

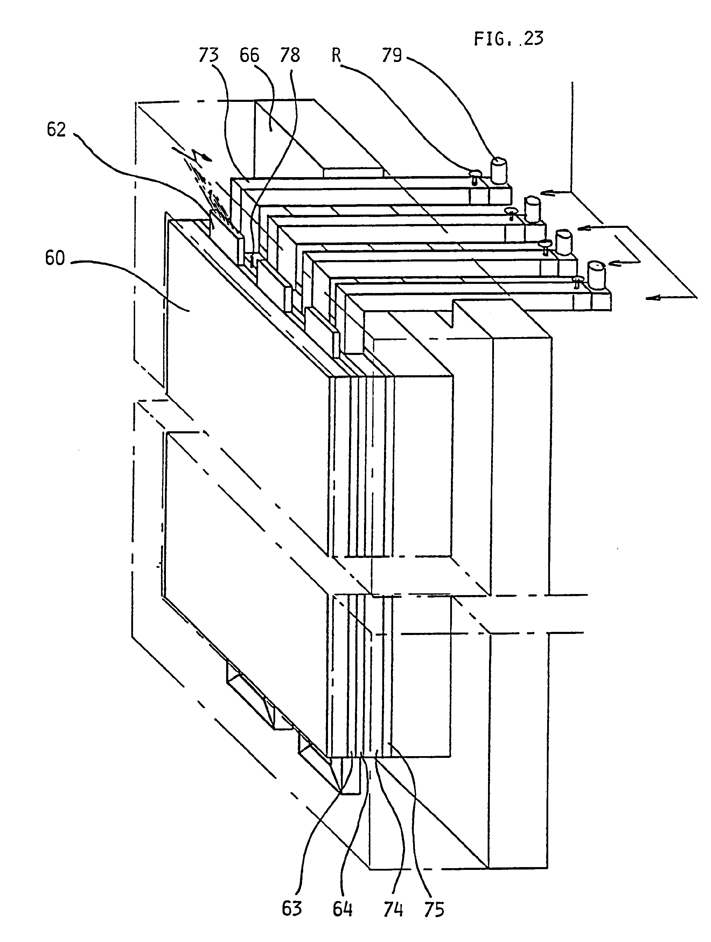

La figure 23 montre, vu en perspective, un exemple de module mixte avec priorité au chauffage, les numéros de repère des figures précédentes ont été utilisés on voit la disposition des diverses couches du module, les sorties d'éléments de chauffe 62 et de circuits de refroidissement 73 équipés chacun d'un robinet R par exemple à pointeau de réglage de débit et une électrovanne 79 asservie par la commande électronique de cycle.

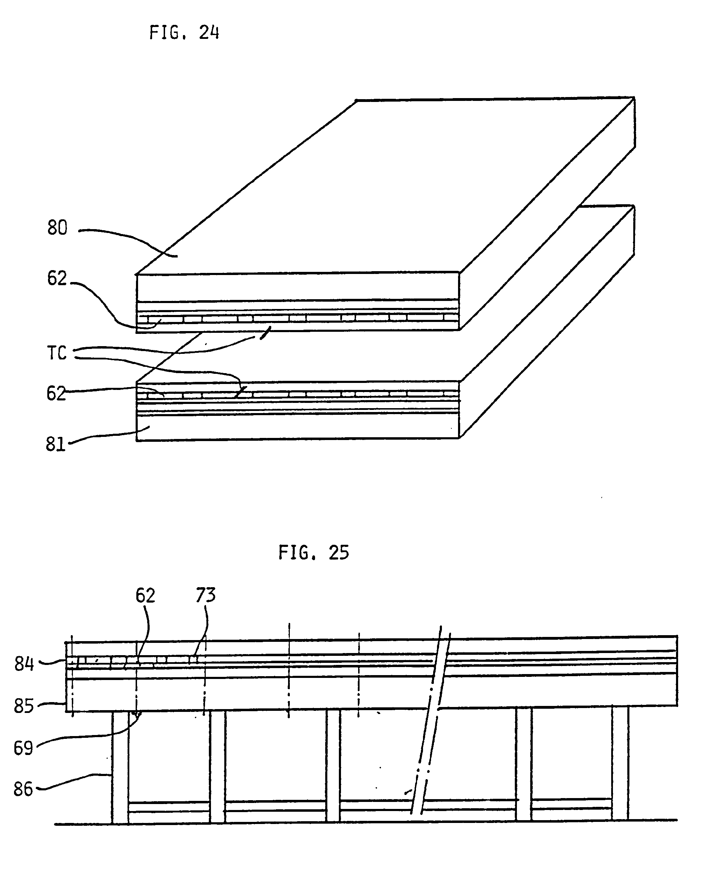

La figure 24 montre schématiquement un exemple de plateaux de presse équipés chacun d'un module mixte de chauffe et de refroidissement 80, 81 disposés en regard pour la mise en oeuvre de matériaux composites à hautes performances.

La figure 25 montre un exemple schématique de module 84 monté sur le plateau inférieur 85 d'une presse hydraulique. Ce plateau est monté sur des pieds 86 servant de renforts.

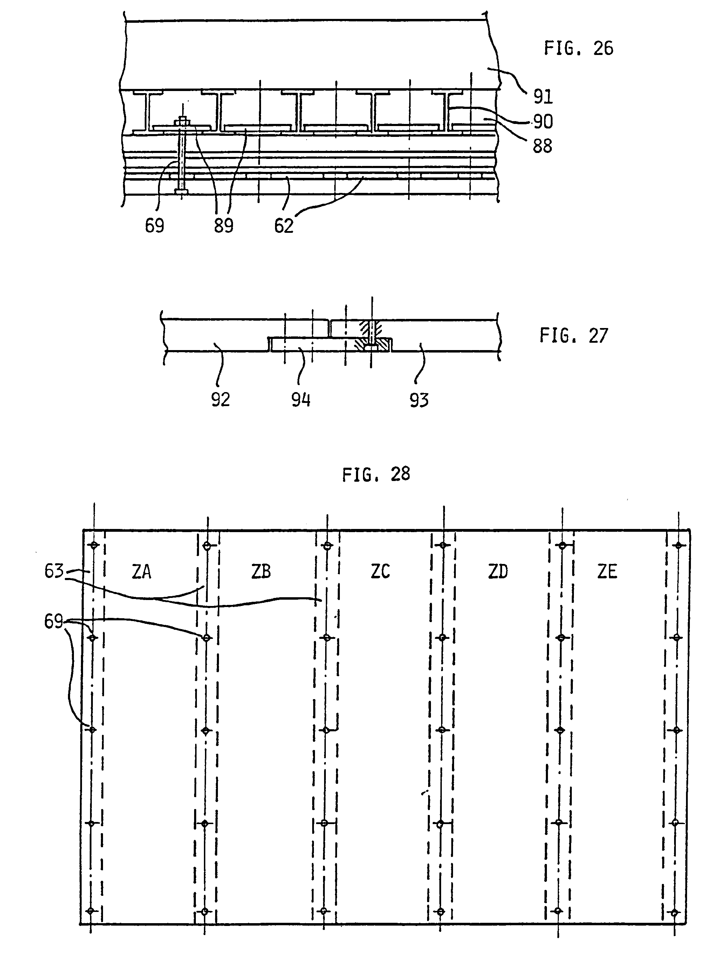

La figure 26 montre un exemple de montage de module 87 selon l'invention sur la poutre 88 d'une presse pneumatique au moyen de vis 69 et de plaques 89 disposées entre les profilés 90 de la presse constituant le sommier supérieur 91.

La figure 27 montre un moyen de jonction des plaques de répartition calorifique 92, 93 en éléments fractionnés pour réaliser de grandes surfaces de travail. Les plaques 92, 93 sont fraisées pour recevoir des plaques de liaison 94 vissées sur chacune des plaques de répartition.

Sur la figure 28 on a montré la fixation des différentes couches constitutives d'un module constitué de zones Za à Ze délimitées par des cales 63. Les vis 69 de fixation traversent les cales 63 ainsi que certaines des cales 74 du sous-module de refroidissement. La planéité de la surface de chauffe est obtenue à froid ou à chaud en serrant plus ou moins ces vis sur l'ensemble de la surface, la planéité est contrôlée avec une ou plusieurs grandes règles de mesure.

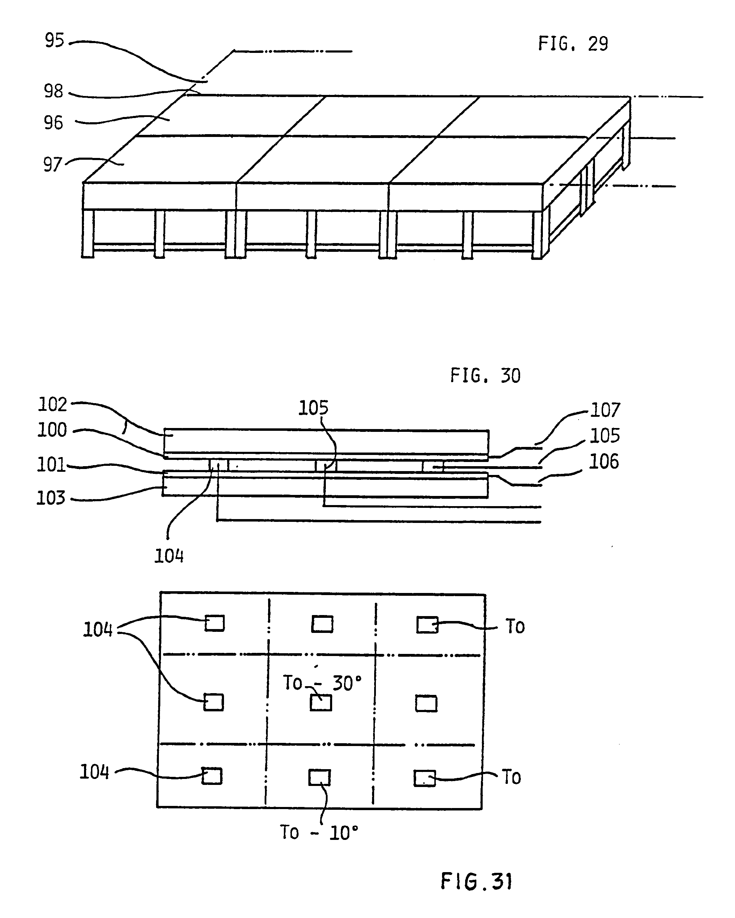

La figure 29 montre schématiquement une grande surface de chauffe réalisée par assemblage de modules de chauffe selon l'invention de dimensions standardisées, par exemple 3m x 2m, soit une surface de 9m x 4m.

Cette façon de procéder permet de s'affranchir des limitations habituelles de dimensions puisque leur mise à niveau ne pose pas de problème. Lorsque l'on ajoute une rangée 95 de modules, soit trois rangées 95, 96, 97, les connexions internes côté 98 ainsi que les raccordements des circuits de refroidissement sont sortis en dessous des modules.

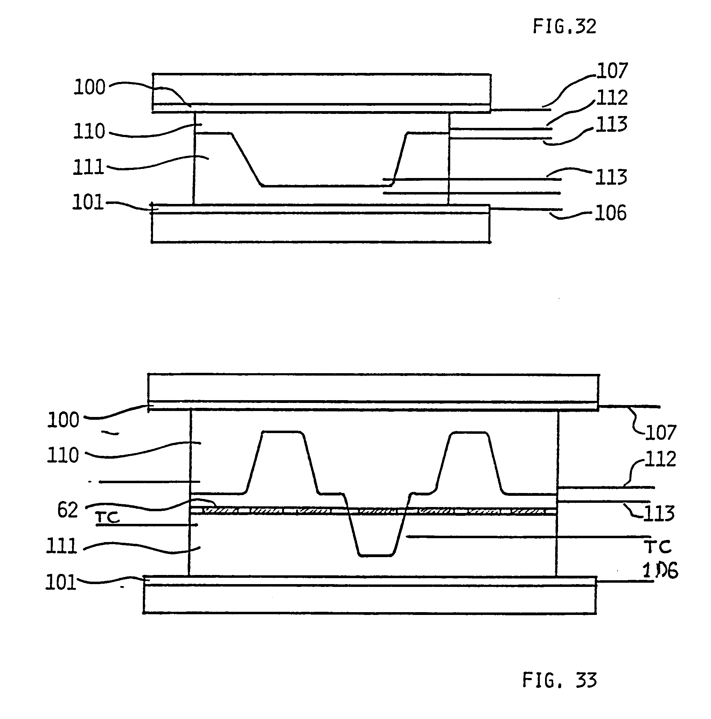

Les figures 30 et 31 montrent un mode de contrôle et de réglage de l'homogénéité de température de surface des plaques de répartition calorifique 100, 101 de modules supérieur et inférieur en regard 102, 103 (par exemple fixés chacun sur un plateau de presse) au moyen de cales 104 dont la disposition au centre des zones est montrée sur la figure 31. Chaque cale 104 est munie d'un capteur de mesure de température 105, par exemple un thermocouple TC, coopérant avec des capteurs de mesure identiques 106 et 107 placés sur les plaques 101 et 100.

Les déperditions calorifiques des coins et des bords, sont mesurées et compensées électroniquement par une distribution de puissante adéquate.

Les cales 104 peuvent être remplacées par des éprouvettes en matériaux composites de même nature que ceux des pièces à réaliser, munies également chacune d'un capteur de mesure de température.

La figure 32 montre un exemple de régulation de température homogène sur chaque partie 110, 111 d'un moule fixé sur les plaques de répartition calorifique 100, 101 des modules selon l'invention. Plusieurs moules peuvent être mis en oeuvre sur une même surface de chauffe. Les plaques de répartition calorifique 100, 101 des modules de chauffe sont équipées de capteurs TC de mesure de température 106, 107 et les parties supérieure et inférieure du moule sont également équipées de capteurs 112, 113 permettant d'effectuer la régulation de température par zone sur les moules suivant les besoins liés notamment aux fuites thermiques.

Lorsque les moules sont de hauteur importante, figure 33, on a prévu d'incorporer, dans les parties les plus éloignées en hauteur des surfaces de chauffe, des éléments blindés de chauffe coopérant avec lesdites surfaces de chauffe pour compenser les fuites thermiques dues à la hauteur des moules et aux difficultés de leur isolation thermique. Ces éléments de chauffe 62 sont montés de façon identique à celle des modules décrits dans les figures précédentes.

On peut également, pour les mêmes raisons, prévoir des portions de circuit de refroidissement directement introduites dans les moules ; lorsque la forme des moules le permet, et que les quantités de pièces à produire sont importantes, ce sont les moules eux-mêmes qui peuvent comporter l'intégralité des surfaces de chauffe et des circuits de refroidissement

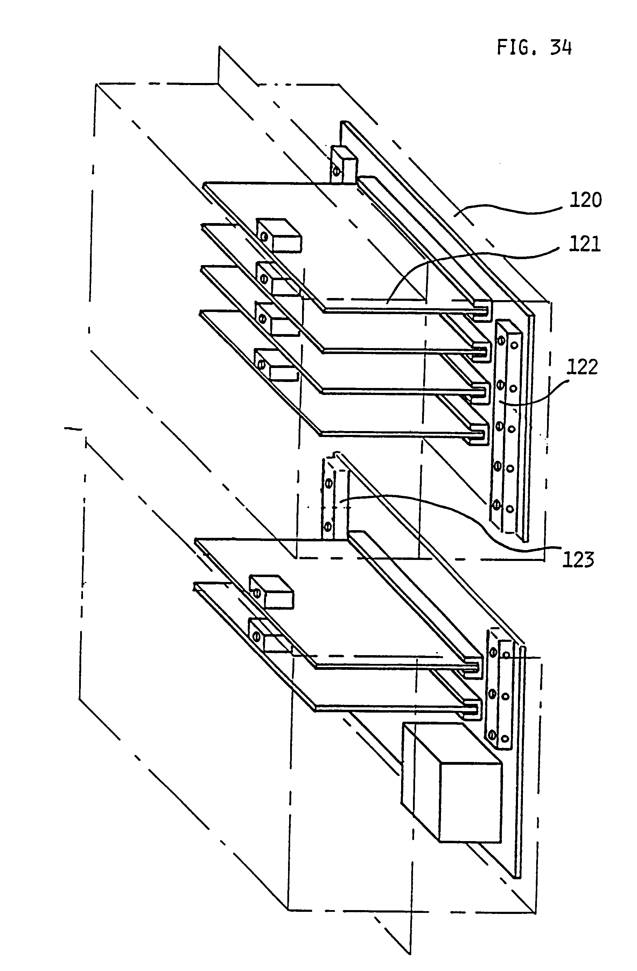

La figure 34 montre un exemple de boîtier électronique 120 de commande et de régulation de puissance par zone des modules selon l'invention. Il comporte une carte 121 de modulation de puissance par zone.

Ces cartes jouent le rôle d'actionneurs par l'intermédiaire de triacs ou de relais de puissance. Elles sont pilotées en train d'ondes ou en onde de phase ou par toutes autres techniques compatibles. Les cartes sont montées en rack sur un support modulaire permettant d'adapter le nombre de cartes au nombre de zones de chauffe. On a prévu également la régulation par microprocesseur des modules haut et bas dans le cas de deux plateaux chauffants ou en cas de multi-plateaux intermédiaires. Des borniers d'entrée 122 et de sortie 123 permettent d'assurer les liaisons avec l'armoire électrique de distribution de puissance et avec les différents éléments chauffants et moyens de mesure.

Les cartes sont équipées chacune d'un potentiomètre de réglage manuel de la puissance, pouvant agir sur chacune des zones superposées en symétrie, tout en permettant la régulation par zone autour de deux points de consigne différents entre le module inférieur et le module supérieur, en conservant l'indépendance des réglages entre chaque zone.

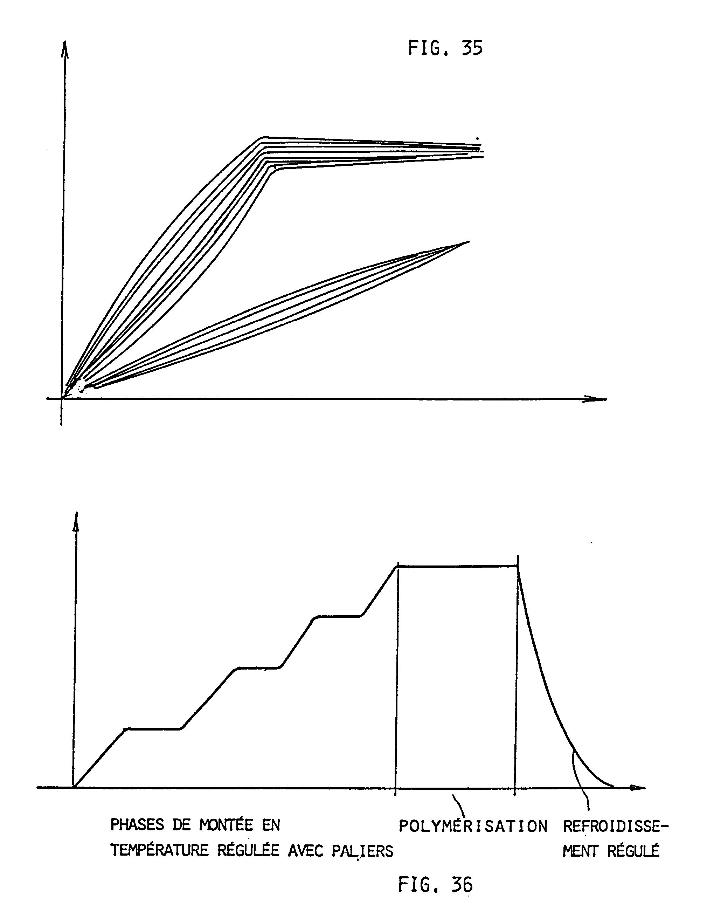

La figure 35 montre un exemple de courbes de dispersions de températures rencontrées sur tous les types connus de plateaux chauffants au cours de la montée des plateaux en température ainsi qu'au niveau du maintien du palier de température de service.

La figure 36 montre un exemple de courbe de montée à la température de service selon l'invention. Cette montée s'effectue par paliers contrôlés, sans aucune dispersion car la puissance n'est pas délivrée totalement, mais progressivement jusqu'au palier de polymérisation pendant une durée de cycle calculée et ajustée en fonction des caractéristiques spécifiques à chaque équipement. Il en est de même pour le refroidissement dont la durée n'est pas liée aux chocs thermiques puisque l'absorption de ceux-ci a été prévue mécaniquement.

Selon les besoins, la puissance peut être ajustée par divers moyens de complexité croissante :
1 - manuellement au moyen d'un potentiomètre par carte ;
2 - automatiquement à partir d'un calculateur informatique et d'un logiciel adapté à cette fonction, permettant d'afficher directement à l'écran des valeurs de température pour chaque zone et points de tests de l'équipement ;
3 - automatiquement en optimisant l'homogénéité de température sur la surface du module en la contrôlant sur chaque zone par des ondes extérieures placées au centre de la zone de contact ou entre chaque module, en définissant des valeurs comparatives entre le point de consigne mesuré par le capteur placé dans la plaque de répartition calorifique, et la température en surface pour chaque zone, différente entre le centre du module, les coins et les bords ;
4 - automatiquement en optimisant l'homogénéité de température sur les outillages ou moules de production dont le nombre peut varier de un à n sur un même plateau ; chaque moule est équipé de capteurs de mesure TC, coopérant avec les moyens électroniques ou informatiques de distribution de la puissance de chauffe, pour régler celle-ci sur les pièces à fabriquer en tenant compte de toutes les dispersions calorifiques dues aux surfaces d'échange des outillages non isolées thermiquement, à leur position par rapport au centre et à leur éloignement par rapport à la surface de chauffe ;
5 - automatiquement en assurant la gestion des boucles de régulation, soit à partir de régulateurs de tableau indépendants pour chaque module de chauffe, soit par un système informatique dans lequel le logiciel de régulation est programmé et met en oeuvre des algorithmes de régulation plus performants, par exemple auto-adaptatifs, en comparaison avec une régulation en P.I.D.

Cette gestion de la régulation de température en multi-zones permet de réguler une valeur différente des points de consigne en suivant le profil de montée en température et en améliorant la tolérance de la dynamique de chauffe pendant la ou les différentes montées en température du module (figure 36), assurant ainsi une homogénéité de grande précision sur le ou les paliers de température de cycle.

## Revendications

1. Equipement chauffant électriquement à hautes températures destiné à être monté sur un support mécanique rigide (66), notamment un bâti et une table de presse, pour la fabrication de produits en matière plastique et matériaux composites, et du type comportant :
une plaque de répartition calorifique (60) éloignée dudit support mécanique (66),
des moyens d'isolation thermique (65) prévus contre ledit support mécanique (66) et sur les bords latéraux dudit équipement,
des moyens de chauffage électriques et des moyens de refroidissement disposés entre ladite plaque de répartition calorifique (60) et lesdits moyens d'isolation thermique (65),
des moyens de régulation thermique pour maintenir une température homogène sur toute la surface de ladite plaque de répartition calorifique (60) en fonction du programme de fabrication,
caractérisé en ce que :
a) lesdits moyens de chauffage électriques et lesdits moyens de refroidissement sont disposés en couches indépendantes entre lesdits moyens d'isolation thermique (65) et ladite plaque de répartition calorifique (60),
b) les moyens de chauffage électriques sont composés d'un sous-module de chauffe (61) situé du côté de ladite plaque de répartition calorifique (60) et d'une plaque de retour calorifique (64) accolée audit sous-module de chauffe (61) du côté opposé à ladite plaque de répartition calorifique (60),
c) le sous-module de chauffe (61) comporte une pluralité d'éléments de chauffe (62) blindés, plats et monobloc, disposés dans le sens de la largeur de ladite plaque de répartition calorifique (60) et entretoisés par des cales (63),
d) chaque élément de chauffe (62) comporte au moins trois résistances électriques (X1, X2, X3) séparées et réparties dans le sens de sa longueur,
e) les éléments de chauffe (62) sont répartis dans le sens de la longueur de ladite plaque de répartition calorifique (60) en au moins trois zones définissant grâce à la répartition des résistances électriques (X1, X2, X3) dans le sens de la largeur de ladite plaque (60), au moins neuf zones de chauffe (Z1... Z9) juxtaposées et jointives,
f) la plaque de répartition calorifique (60) comporte au niveau de chaque zone de chauffe (Z1... Z9) un capteur de température (TC),
g) les résistances électriques de chaque zone de chauffe sont alimentées électriquement de façon indépendante des résistances électriques des autres zones de chauffe par l'intermédiaire de moyens électroniques d'alimentation en puissance par zone en fonction de consignes prédéterminées par zone de chauffe coopérant avec lesdits capteurs de température, lesdits moyens d'alimentation en puissance par zone étant régulés par un boîtier de régulation PID.

2. Equipement selon la revendication 1 caractérisé en ce que les moyens de refroidissement comportent :
un module de refroidissement (72) présentant plusieurs circuits de refroidissement indépendants (73) montés en parallèle et entretoisés par des cales, lesdits circuits de refroidissement étant asservis par des électrovannes à partir d'un boîtier électronique de commande, et
une deuxième plaque de retour calorifique (75) accolée au module de refroidissement du côté opposé à ladite plaque de répartition calorifique (60).

3. Equipement selon la revendication 1 ou 2 caractérisé en ce que les moyens de refroidissement (72, 75) sont interposés entre la plaque de répartition calorifique (60) et les moyens de chauffage électriques.

4. Equipement selon la revendication 1 ou 2 caractérisé en ce que les moyens de chauffage électriques sont interposés entre la plaque de répartition calorifique (60) et les moyens de refroidissement.

5. Equipement suivant l'une quelconque des revendications 1 à 4, caractérisé en ce que les zones de chauffe de la périphérie ont, de préférence, des surfaces différentes de celles du centre.

6. Equipement selon l'une quelconque des revendications précédentes, caractérisé en ce que certaines zones, coins et bords de ce dernier, sont associées à des résistances électriques de puissances différentes.

7. Equipement selon l'une quelconque des revendications précédentes caractérisé en ce que les moyens électroniques d'alimentation en puissance par zone comportent pour chaque zone de chauffe une carte électronique de modulation de puissance (121) équipée d'un potentiomètre de réglage manuel de la puissance électrique.

8. Equipement selon l'une quelconque des revendications précédentes caractérisé en ce qu'il comporte de plus un calculateur informatique muni d'un logiciel adapté et destiné à réguler les moyens électroniques d'alimentation en puissance par zone, en fonction de consignes prédéterminées par zone de chauffe.

9. Equipement selon la revendication 8 caractérisé en ce que chaque résistance électrique est équipée d'un capteur de mesure de température relié au calculateur informatique.

## Patentansprüche

1. Elektrische Hochtemperaturheizeinrichtung, die auf eine starre mechanische Unterlage (66), insbesondere auf eine Maschinenrahmen oder Pressentisch, montiert wird und der Erzeugung von Produkten aus Kunststoff oder Verbundwerkstoffen dient, umfassend:
eine Wärmeverteilungsplatte (60), die von dieser mechanischen Unterlage (66) beabstandet ist,
Mittel (65) zur Wärmeisolation, die an der mechanischen Unterlage (66) und an den seitlichen Rändern der Einrichtung vorgesehen sind,
elektrische Heizmittel und Kühlmittel, die zwischen der Wärmeverteilungsplatte (60) und den Mitteln (65) zur Wärmeisolation angeordnet sind,
Mittel zur Wärmeregulation, um in Abhängigkeit von dem Fertingungsprogramm auf der gesamten Oberfläche der Wärmeverteilungsplatte (60) eine homogene Temperatur zu halten
dadurch gekennzeichnet, daß:
a) die elektrischen Heizmittel und die Kühlmittel in getrennten Schichten zwischen den Mitteln (65) zur Wärmeisolation und der Wärmeverteilungsplatte (60) angeordnet sind,
b) die elektrischen Heizmittel aus einem Heiz-Submodul (61), der sich auf der Seite der Wärmeverteilungsplatte (60) befindet, und aus einer Wärmerückleitplatte (64), die auf der in bezug die Wärmeverteilungsplatte (60) entgegengesetzten Seite an den Heiz-Submodul (61) angefügt ist, bestehen,
c) der Heiz-Submodul (61) von ummantelten, flachen und einstückigen Heizelementen (62) enthält, die in Richtung der Breite der Wärmeverteilungsplatte (60) angeordnet sind und durch Zwischenstücke (63) getrennt sind,
d) jedes Heizelement (62) mindestens drei getrennte und in Richtung seiner Länge verteilte elektrische Widerstände (X1, X2, X3) enthält,
e) die Heizelemente (62) in Richtung der Länge der Wärmeverteilungsplatte (60) in mindestens drei Zonen verteilt sind, welche aufgrund der Verteilung der elektrischen Widerstände (X1, X2, X3) in Richtung der Breite der Platte (60) mindestens neun nebeneinanderliegende und aneinandergrenzende Heizzonen (Z1...Z9) definieren,
f) die Wärmeverteilungsplatte (60) in jeder Heizzone (Z1...Z9) einen Temperaturmeßfühler (TC) enthält,
g) die elektrischen Widerstände jeder Heizzone unabhängig von den elektrischen Widerständen der anderen Heizzonen elektrisch angespeist werden, und zwar mit Hilfe von elektronischen Mitteln, die der zonenweisen Leistungsstromversorgung in Abhängigkeit von den für jede Heizzone vorbestimmten Sollwerten dienen und mit den Temperaturmeßfühlern zusammenwirken, wobei die Mittel zur zonenweisen Leistungsstromversorgung durch einen PID-Regelungskasten geregelt werden.

2. Einrichtung nach Anspruch 1, dadurch gekennzeichnet, daß die Kühlmittel umfassen:
einen Kühlmodul (72), der mehrere unabhängige Kühlkreise (73) aufweist, die parallel angeordnet sind und durch Zwischenstücke getrennt werden, wobei die Kühlkreise anhand eines elektronischen Steuerkastens durch Elektroventile geregelt werden, und
eine zweite Wärmerückleitplatte (75), die auf der in bezug auf die Wärmeverteilungsplatte (60) entgegengesetzten Seite an den Kühlmodul angefügt ist.

3. Einrichtung nach Anspruch 1 oder 2, dadurch gekennzeichnet, daß die Kühlmittel (72, 75) zwischen der Wärmeverteilungsplatte (60) und den elektrischen Heizmitteln angeordnet sind.

4. Einrichtung nach Anspruch 1 oder 2, dadurch gekennzeichnet, daß die elektrischen Heizmittel zwischen der Wärmeverteilungsplatte (60) und den Kühlmitteln angeordnet sind.

5. Einrichtung nach irgendeinem der Ansprüche 1 bis 4, dadurch gekennzeichnet, daß die Heizzonen der Peripherie vorzugsweise andere Oberflächen aufweisen als die der Mitte.

6. Einrichtung nach irgendeinem der vorhergehenden Ansprüche, dadurch gekennzeichnet, daß bestimmte Zonen, und zwar die Ecken und Kanten dieser letzteren mit elektrischen Widerständen unterschiedlicher Leistungen versehen sind.

7. Einrichtung nach irgendeinem der vorhergehenden Ansprüche, dadurch gekennzeichnet, daß die elektronischen Mittel zur zonenweisen Leistungsstromversorgung für jede Heizzone eine elektronische Karte zur Leistungsmodulation (121) umfassen, die mit einem Potentiometer zur manuellen Einstellung der elektrischen Leistung ausgestattet ist.

8. Einrichtung nach irgendeinem der vorhergehenden Ansprüche, dadurch gekennzeichnet, daß sie zusätzlich einen Rechner umfaßt, der mit einer passenden Software versehen ist und dazu bestimmt ist, die elektronischen Mittel zur zonenweisen Leistungsstromversorgung in Abhängigkeit von für jede Heizzone vorbestimmten Sollwerten zu regeln.

9. Einrichtung nach Anspruch 8, dadurch gekennzeichnet, daß jeder elektrische Widerstand mit einem Temperaturmeßfühler bestückt ist, der mit dem Rechner verbunden ist.

## Claims

1. High temperature electrical heater equipment for mounting on a rigid mechanical support (66), in particular the table or frame of a press, for manufacturing products from plastic material and from composite materials, of the type comprising:
a heat-distribution plate (60) at a distance from said mechanical support (66),
thermal insulation means (65) provided against said mechanical support (66) and on the lateral margins of said equipment,
electrical heater means and cooling means disposed between said heat-distribution plate (60) and said thermal insulation means (65),
temperature regulation means for maintaining a uniform temperature over the entire area of said heat-distribution plate (60) as a function of the manufacturing program,
characterized in that:
a) the said electrical heater means and the said cooling means are disposed in independent layers between said thermal insulation means (65) and said heat-distribution plate (60),
b) the electrical heater means comprise a heater submodule (61) situated adjacent to said heat-distribution plate (60) and a heat return plate (64) fixed to said heater submodule (61) on the opposite side to said heat-distribution plate (60),
c) the heater submodule (61) includes a plurality of flat and solid metal-clad heater elements (62) disposed across the width of the said heat-distribution plate (60) and spaced apart by spacer blocks (63),
d) each heater element (62) includes at least three electrical resistances (X1, X2, X3) which are separate from one another and distributed in the lengthwise direction of the element,
e) the heater elements (62) are distributed along the length of said heat-distribution plate (60) in at least three zones, thereby defining at least nine juxtaposed and joining heater zones (Z1,..., Z9) by virtue of the electrical resistances (X1, X2, X3) being distributed across the width of said plate (60),
f) the heat-distribution plate (60) includes a temperature sensor (TC) in each heater zone (Z1,..., Z9),
g) the electrical resistances in each heater zone are electrically powered independently from the electrical resistances in the other heater zones via electronic power feed means for each zone, and as a function of predetermined references for each heater zone co-operating with said temperature sensors, said power feed means for each zone being regulated by a PID regulator.

2. Equipment according to claim 1, characterized in that the cooling means comprise:
a cooling module (72) having a plurality of independent cooling circuits (73) connected in parallel and spaced apart by spacer blocks, said cooling circuits being servo-controlled by electrically controlled valves governed by an electronic control circuit, and
a second heat return plate (75) fixed to the cooling module on the side opposite to said heat-distribution plate (60).

3. Equipment according to claim 1 or 2, characterized in that the cooling means (72, 75) are interposed between the heat-distribution plate (60) and the electrical heater means.

4. Equipment according to claim 1 or 2, characterized in that the electrical heater means are interposed between the heat distribution plate (60) and the cooling means.

5. Equipment according to any one of claims 1 to 4, characterized in that the peripheral heater zones are preferably different in area from the central heater zones.

6. Equipment according to any one of the preceding claims, characterized in that some zones, at the corners and at the margins of the equipment, are associated with electrical resistances of different powers.

7. Equipment according to any one of the preceding claims, characterized in that the electronic power feed means for each zone comprise, for each heater zone, an electronic power modulating card (121) fitted with a manually adjustable potentiometer for setting electrical power.

8. Equipment according to any one of the preceding claims, characterized in that it further includes a computer provided with software suitable for regulating the electronic power feed means for each zone as a function of predetermined references for each heater zone.

9. Equipment according to claim 8, characterized in that each electrical resistance is fitted with a temperature measuring sensor connected to the computer.
